# EUROPEAN PATENT SPECIFICATION

(11) **EP 2 892 206 B1**
(45) Date of publication and mention of the grant of the patent: **19.07.2017**
(21) Application number: 14197956.7
(22) Date of filing: 15.12.2014
(51) Int. Cl.: H04L 29/08, H04L 29/06, H04L 9/08, H04L 9/32, H04L 9/28, H04L 9/06

(54) **System and method for push framework security**
System und Verfahren zur Push-Framework-Sicherheit
Système et procédé pour la sécurité d'un environnement Push

(30) Priority: 17.12.2013 IL 22998713
(43) Date of publication of application: 08.07.2015
(73) Proprietor: Deutsche Telekom AG, 53113 Bonn (DE)
(72) Inventor: Yahalom, Ran, 8554500 Tlalim (IL); Poliak, Yuri, 8450628 Beer Sheva (IL); Mimran, David, 6451613 Tel Aviv (IL); Shapira, Bracha, 8472811 Beer Sheva (IL); Elovici, Yuval, 7986400 Moshav Arugot (IL); Peylo, Christoph, 49401 Damme (DE)
(74) Representative: Weickmann & Weickmann PartmbB

(56) References cited:
- US-A1- 2012 224 690
- LAUREN BURDUSEL: "Cryptographic protocol for secure dissemination of notification messages", INTELLIGENT COMPUTER COMMUNICATION AND PROCESSING (ICCP), 2011 IEEE INTERNATIONAL CONFERENCE ON, IEEE, 25 August 2011 (2011-08-25), pages 399-405, XP032063535, DOI: 10.1109/ICCP.2011.6047905 ISBN: 978-1-4577-1479-5

## Description

### Field of Invention

The invention relates to messaging and communication systems. More specifically, the invention relates to the security of a Push framework messaging system.

### Background of the Invention

Messaging systems of cellular networks are an important tool in modern world and uses for various applications in a variety of aspects such as news updates, professional messages, emergency messages etc. Most of the messaging systems are based on the polling method wherein a client application actively samples the status of an external device. For example, an application in a mobile device, actively samples the messaging system to check if there is an incoming message. An alternative to the polling method is the push method. The push framework uses actions that do the required processing, and then "push" the data to the view layer to render the results, thereby saves energy, time and resources in contrast to the polling framework. Security problems and lack of privacy are major problems in the field of the messaging systems. Most of the messaging systems existing today are not secured, and the content of the unprotected messages can leak to an unauthorized user. The secured messaging systems that exist are usually very complicated to use and to operate.

US 2012/224690 discloses a system and a method for cross-enterprise communication that enables intermediary communication components to carry out cross enterprise communication.

It is therefore an object of the present invention to provide a system and method for securing a push messaging system framework.

It is another object of the present invention to provide a system and method for securing a push messaging system framework with a high level of security and a high level of ease of use.

### Summary of Invention

In one aspect, the invention is a system for securing a push messaging framework, comprising:
a. a messaging service which forwards a message between at least two end points and generates a pair of a cryptographic public key and a cryptographic private key;
b. a sender application server which registers with said messaging service and receives from said messaging server said public key of the messaging server; wherein said sender application server generates a public key and a private key and sends to the messaging service said public key;
c. one or more receiver application which registers with said messaging service and receive from said messaging server said public key of the messaging service; wherein said receiver application generates a public key and a private key and sends to the messaging service said public key;
   wherein said sender application server, encrypts a message with the public key of said messaging server and sign with the private key of said sender application server and sends said encrypted message to the messaging service;
   wherein said messaging server verifies said signature of said sender application server using said public key of said sender application server and decrypts said message with said private key of said messaging server, and wherein said messaging service encrypts said message multiple times, with said public key of said receiver application, signs with the private key of the messaging server and sends said message to said receiver application/s;
   wherein said receiver application verifies the signature of the messaging server with said public key of the messaging server and decrypts the message with the private key of said receiver application; and
   wherein:
   a) said sender application server generates a master key, and said receiver application generates a pair of a private auxiliary key and a public auxiliary key; and
   b) wherein said receiver application sends a registration request to said sender application server which contains said public auxiliary key;
   c) wherein said sender application server encrypts said master key with said public auxiliary key and sends said encrypted master key to said receiver application;
   d) wherein said receiver application decrypts said master key with said private auxiliary key and stores said master key in a memory of said receiver application; and
   e) wherein said sender application server encrypts a message with said master key and encrypts said encrypted message with said public key of the messaging server; and
   f) wherein said sender application server sends said message to said messaging service, which decrypts said message with the private key of the messaging service then encrypts said message with the public key of the receiver application and sends said message to the receiver application; and
   wherein said receiver application decrypts the message with the private key of said receiver application , and then said receiver application, decrypts the resulting message with the master key, thereby receiving the original plaintext of said message;
   wherein said system is characterized by:
   in steps b) to d):
      i. said end point application randomly generates a gateway, and sends a scrambling hash function through said gateway to said message service;
      ii. said messaging service generates and stores a first hash function generator and sends said first hash function generator along with a public key of said messaging service to the gateway;
      iii. in said gateway generating a random binary string of size *n;*
      iv. said first hash function receives said binary string of size *n* as input, stores said binary string of size *n* and returns a concrete hash function;
      v. sending said concrete hash function to said application along with the messaging service public key;
      vi. immediately deleting said first hash function generator and said concrete hash function from said gateway memory;
      vii. generating by said application said private key and public key, and scrambling said keys using said concrete hash function; and
   deleting said concrete hash function from said application memory;
   wherein sending a message to the end point application further comprises the steps of:
   i. creating a second hash function generator by said message service;
   ii. sending to the gateway said second hash function generator, said first hash function generator and said encrypted message by said message service;
   iii. using said stored binary string by the gateway to derive said concrete first hash function from said first hash function generator;
   iv. generating a second binary string by said gateway, storing said second binary string instead of said stored binary string and calculating a second concrete hash function;
   v. sending by said gateway said concrete hash function and said second concrete hash function to the application along with the message.
   vi. deleting from the gateway's memory said hash function generator and said second hash function generator;
   vii. reconstructing the private key by said application with the first concrete hash function;
   viii. decrypting the message;
   ix. re-scrambling said private key using said second concrete hash function; and
   x. deleting said hash functions and the private key from the application's memory.

In an embodiment of the invention said messaging service comprises at least one server.

In an embodiment of the invention the system further comprising an additional dedicated security server, which communicates with said sender application server over an internal secured channel.

In another aspect the invention relates to a method for securing a push messaging framework comprising the steps of:
a. generating a private key and a public key by a Messaging Service;
b. sending a registration request by a sender application and a receiver application to said messaging service;
c. sending in reply said public key of said messaging service to said sender application and to said receiver application;
d. generating a public key and a private key by said sender application and by said receiver application;
e. sending said public key of said sender application and the public key of said receiver application to the messaging service;
f. responding with an acknowledgment indicating that the registration was completed successfully by the messaging service;
g. encrypting a message with said public key of said messaging service by the sender application, signing with said sender application private key and sending said encrypted message to said messaging service;
h. verifying by said messaging service the signature of said sender application with said sender application public key, and decrypting said message with said private key of said messaging service
i. encrypting said message with said receiver application public key and signing with said messaging service's private key;
j. sending said message by the messaging service to the receiver application; and
k. verifying the signature with the messaging service's public key by the receiver application;
l. decrypting said message by the receiver application with the private key of said receiver application;
wherein:
A) prior to the step of generating a public key and a private key by the messaging service, further comprising the stages of
   a) generating a master key by said sender application server and generating a pair of a private auxiliary key and a public auxiliary key by said receiver application;
   b) sending a registration request by said receiver application to said sender application server wherein said registration request contains said public auxiliary public key of said receiver application;
   c) encrypting said master key generated by said sender application server with the public auxiliary key of said receiver application and sending said encrypted master key to said receiver application;
   d) decrypting by said receiver application said encrypted master key with said private auxiliary key of said receiver application and storing said master key in said receiver application memory;
   e) encrypting a message by the sender application server with the master key and encrypting said encrypted message with said public key of the messaging service;
   f) sending said encrypted message to the messaging service; and
B) In addition to said step of decrypting said message by the receiver application with the private key of said receiver application, decrypting by said receiver application said encrypted message with the master key and receiving the original plaintext of said message.
said method is characterized by:
said steps b) to d) comprises the steps of:
   i. randomly generating a gateway by said end point application, and sending through said gateway a scrambling hash function to said message service;
   ii. generating and storing a first hash function generator by said messaging service and sending to the gateway said first hash function generator along with a public key of said messaging service;
   iii. generating a random binary string of size *n* in said gateway;
   iv. receiving said binary string of size *n* as input by said first hash function, storing said binary string of size *n* and returning a concrete hash function;
   v. sending said concrete hash function to said application along with the messaging service public key;
   vi. immediately deleting said first hash function generator and said concrete hash function from said gateway memory;
   vii. generating by said application said private key and public key, and scrambling said keys using said concrete hash function; and
   viii. deleting said concrete hash function from said application memory;
   and wherein sending a message to the end point application further comprises the steps of:
   i. creating a second hash function generator by said message service;
   ii. sending to the gateway said second hash function generator, said first hash function generator and said encrypted message by said message service;
   iii. using said stored binary string by the gateway to derive said concrete first hash function from said first hash function generator;
   iv. generating a second binary string by said gateway, storing said second binary string instead of said stored binary string and calculating a second concrete hash function;
   v. sending by said gateway said concrete hash function and said second concrete hash function to the application along with the message.
   vi. deleting from the gateway's memory said hash function generator and said second hash function generator;
   vii. reconstructing the private key by said application with the first concrete hash function;
   viii. decrypting the message;
   ix. re-scrambling said private key using said second concrete hash function; and
   x. deleting said hash functions and the private key from the application's memory.

In an embodiment of the invention the method further comprising the step of setting up an additional application server for security so that said additional application server can communicate with a sender application server over an internal secured channel.

All the above and other characteristics and advantages of the invention will be further understood through the following illustrative and non-limitative description of embodiments thereof, with reference to the appended drawings. In the drawings the same numerals are sometimes used to indicate the same elements in different drawings.

While certain examples may refer to a mobile phone, other mobile communication systems can be used as well.

### Brief description of the drawings

- Fig. 1 schematically shows a diagram of key possessions according to one embodiment of the present invention;
- Fig. 2 schematically shows a sequence diagram according to a second embodiment of the present invention;
- Fig. 3 schematically shows an architecture of the untrusted model according to an embodiment of the present invention;
- Figs. 4-5 are a schematic sequence of events that occur during the initial key scrambling of the registration stage;
- Figs. 6a - 6c show a schematic Sequence of events that occur during the key reconstruction and re-scrambling of the push stage; and
- Fig. 7 shows a schematic structure of the system with the application server according to an embodiment of the invention.

### Detailed description of the embodiment of the invention

The present invention relates to a system and method for a push messaging framework. The invention further relates to two kinds of security models for safekeeping a private key onboard client. The invention minimizes the duration of a private key exposure in memory so that an attacker have to time an attack to the exact moment that the key is used. This security measure is crucial for clients of operating systems such as Android, which can easily be compromised. In addition, the security model of the present invention supports application authentication functionality intended to prevent pirating.

The present invention comprises three main entities in the push messaging framework: a sender application server which is the sender of the message, a receiver application which is the receiver of the message and the messaging server.

The sender application server (SAS) is the end-point application server that sends the push message. In existing push messaging platforms, it is the developer that sends the push messages to the receiver via a 3rd party application server. To make the framework easier to use, it is desired to also offer the developer an option for sending via a GUI which the framework provides. Furthermore, in order to support peer-to-peer messaging, the framework of the present invention also allows an application to act as a sender. Thus the following three potential sender identities are observed:
- Sender is the developer via a GUI.
- Sender is the developer via an application server.
- Sender is an application: in this case, the sending application pushes messages onto applications on other devices via the Messaging Server (e.g. remote control applications or multiplayer games).

To be clear, regardless of the sender identity, there may or may not be an AS that the application requires for it to function (functionality that has nothing to do with push messaging).

The receiver application (RA) is generally the end-point application that receives the push message (usually an android device). When stated specifically, receiver can mean the application on the android device to which a specific push message is intended. The receiver application could act as a server (i.e. listens for client requests via push messages and then provides some service in response).
The messaging service (MS) is the core of the framework. It includes a scalable set of servers that are mainly responsible for:
- Forwarding a push message from a sender to a receiver.
- Registering end-points and coupling between a sender and all of its receivers.
- Configuration: controls system wide security, compression and SLA configurations.
- SLA monitoring and enforcement.
- Push message processing: prioritization, state management, security, compression, persistence, etc.

In one embodiment of the invention, the system refers to an end-to-end message security model which is intended for a trusted messaging service, in which the users are willing to share the content of the push messages with the messaging service. The trusted model is very easy to use and it is based on cryptographic operations and key generation/distribution on the end-points, which are transparent to the user. All of the cryptographic operations on the end-points are conducted "behind the scenes" by the framework's libraries. However, since the messaging service in the trusted model must be "trusted", i.e. shared with the content of the messages, the security level is medium.

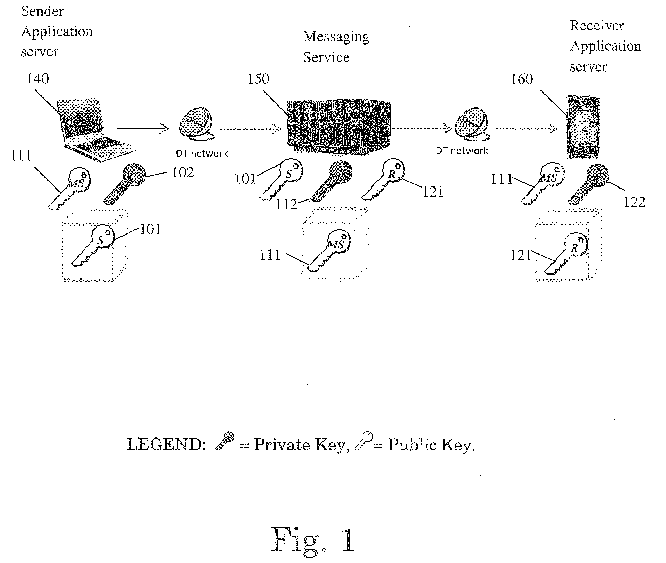

Fig. 1 shows the three main entities in the push messaging framework, the sender application server 140, the receiver application 160, and the messaging service 150.

The method of the present invention for the trusted model comprises the following stages:
1. Message Server key generation stage: The Messaging Service 150 generates an asymmetric pair of keys for itself, a public key 111 and a private key 112.
2. Registration stage: The end-point clients, i.e. the sender application 140 and the receiver Android applications 160, send a registration request from the Message Server. In reply, the Message Server 150 sends to the sender application 140 and the receiver application 160 its public key 111. The sender application 140 then generates its own asymmetric pair of keys, a public key 101 and a private key 102, and the receiver application 160 generates a public key 121 and a private key 122. Each of the end point application i.e., the sender 140 and the receiver application 160 sends their public key, 101 and 121 to the Message Server 150. The Message Server responds with an acknowledgment which indicates that the registration was completed successfully.

### 3. Push stage:

The following operations occur for a single push:
1. The sender 140 encrypts the message with the Messaging Server's public key 111, signs with his private key 102 and sends to the Messaging Server 150 the encrypted message.
2. The Messaging Server 150 verifies the signature with the sender's public key 101 and decrypts the message with its private key 112.
3. The Messaging Server 150 encrypts and signs the message multiple times (broadcast): for each receiver application, the Messaging Server encrypts with the application's public key 101 and 121, sign with the Messaging Server's private key 112 and sends the message to the receiver application.
4. Each Application verifies the signature with the Messaging Server's public key 111 and decrypts the message with its private key 102 and 122 respectively.

A diagram of the post registration key possessions (which entity has which keys) is shown in Fig. 1. The messaging service 150 possess the public key of the sender, 101, the public key of the receiver application, 121 and the public and private keys, 111 and 112 of the messaging service. The sender application 140, possess its own public key 101, private key 102, and the messaging service public key 111. The receiver application 160, possess its own public key 121 and private key 122, and the public key 111 of the messaging service. Keys that are not used for pushing a message from the sender, to the receiver, are boxed.

In a second embodiment of the invention, the system relates to an "untrusted model" for users that do not trust the messaging service and which don't want to share the content of their messages with the Messaging Service. In this embodiment of the invention, there is an essential tradeoff between the two models: a higher level of security in the untrusted model comes at a price of a lower ease-of-use level.

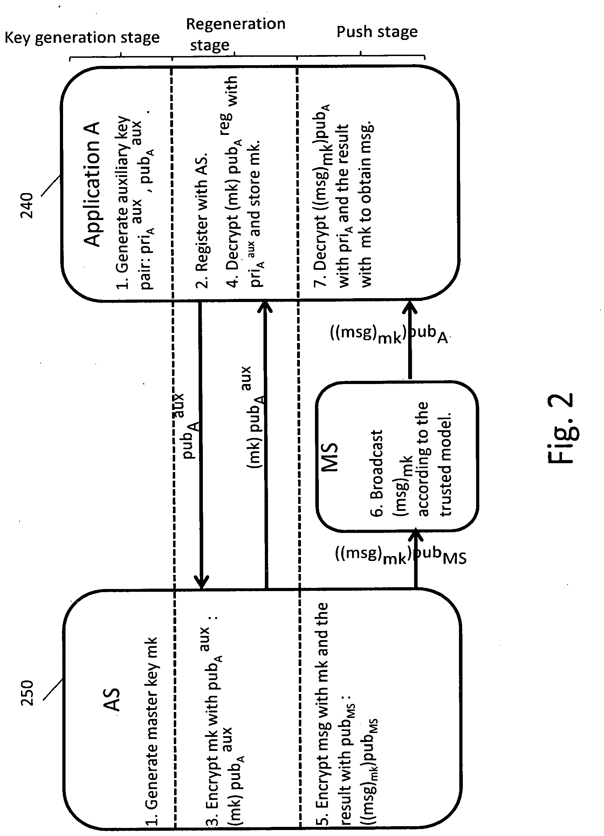

To circumvent the requirement of trusting the Messaging Service, the untrusted model extends the trusted model (i.e. the stages described above for the trusted model, are an inherent part of the untrusted model). First, an application server will have to be set up, so that it can communicate with each of the end point applications over an independent secure channel. Once the secured channel via the application server is established, the system of the invention takes additional steps (i.e. in addition to the steps of the trusted model) schematically described in Fig. 2 as follows:
On the Application Server 250 side:
   1. Key generation stage: the application server 250 generates a symmetric master key.
   2. Registration stage: Upon a registration request that is received from an end point application and which contains that application's public key, the application server 250 encrypts the master key with the end point application's public key and sends it to the application.
   3. Push stage: Before the application server 250 encrypts a push message plaintext with the Messaging Service's public key and sends it to the Messaging Service for broadcast (first step of the push stage in the trusted model), the Application Server encrypts the plaintext with the master key. This produces a cipher that is the message that will actually be pushed according to the trusted model.
On the end point application 240 side:
   1. Key generation stage: the end-point application 240 (i.e., the sender application or the receiver application) generates a public cryptography "auxiliary key pair". It should be noted that, due to the mistrust, the "auxiliary key pair" is generated especially for registration with the Application Server and is a different key pair from the one generated by the push framework API (Application Interface) as part of the trusted model.
   2. Registration stage: Register with the Application Server 250, by sending to it the application's public key. As a response to the registration request, the application 240 receives the symmetric master key, which is encrypted with its auxiliary public key. The application 240 decrypts the master key with its auxiliary private key and securely stores the master key on the device.
   3. Push stage: After a push message has been decrypted with the application's private key (last step of push process in the trusted model), the result is a cipher which was generated from the message plaintext by encrypting it with the master key. Thus, the application uses the master key to decrypts the cipher and obtain the plaintext message.

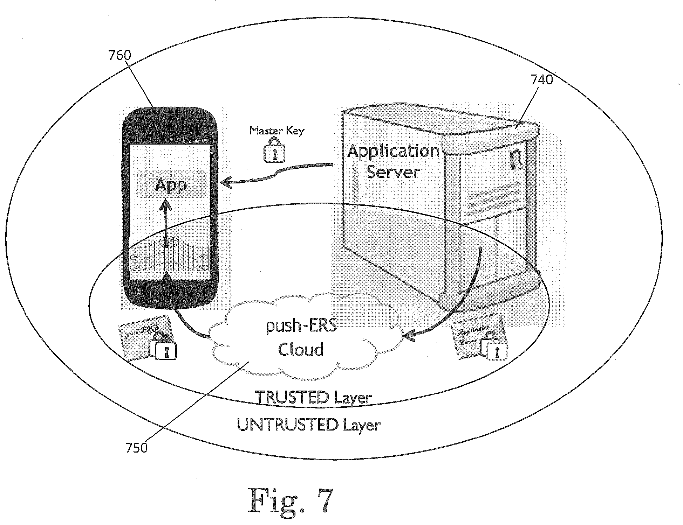

In an embodiment of the invention, the present invention provides an easy-to-use implementation of the untrusted model. The implementation distinguishes between a case with an existing application server and a case without an application server. Fig. 7 shows a schematic structure of the system wherein a message is sent via the application server 740. It can be seen that in the trusted model the messages to the application receiver 760 is encrypted, however the message passes via the messaging service 750 which decrypts the message and re-encrypt said message to send it to the application receiver 740. In contrast, in the untrusted model the message is encrypted with a master key via the independent secure channel and does not pass through the messaging service at the beginning. After the message is encrypted with the master key, said message is sent via the messaging service so that the content of the message is not exposed to the messaging service.

For cases with an application server which communicates with the applications, the implementation of the untrusted model includes the following two extra components:
1. A full installation of a basic security server which exposes the required REST API calls for interaction with the application server via an internal network where the following steps are executed:
   a. Generating the master key.
   b. Encrypting the master key with a given application specific auxiliary public key.
   c. Encrypting a given message with the master key.
   The untrusted model stages are conducted as follows:
   a. Key-generation stage: the application server invokes the security server to generate the master key.
   b. Registration stage: an application sends the application server its auxiliary public key and the application server passes it to the security server. In response the application server receives the encrypted master key from the security server and sends it back to the application.
   c. Push stage: The application server sends the push message to the security server and, in response, receives the master key encrypted message.
2. An extended application API which can conduct steps 1, 2, 4 and 7 in the end point application side (right rectangle of Fig. 2):
   a. generating auxiliary pair of keys, a public application key and a private application key;
   b. registering with the application server;
   c. decrypting the master key with the private key of the application auxiliary key and storing said master key; said master key was received from the application server which was encrypted with the public key of the application auxiliary key;
   d. decrypting the message received from the message service with the application's private key and decrypting the result with master key to obtain the message.

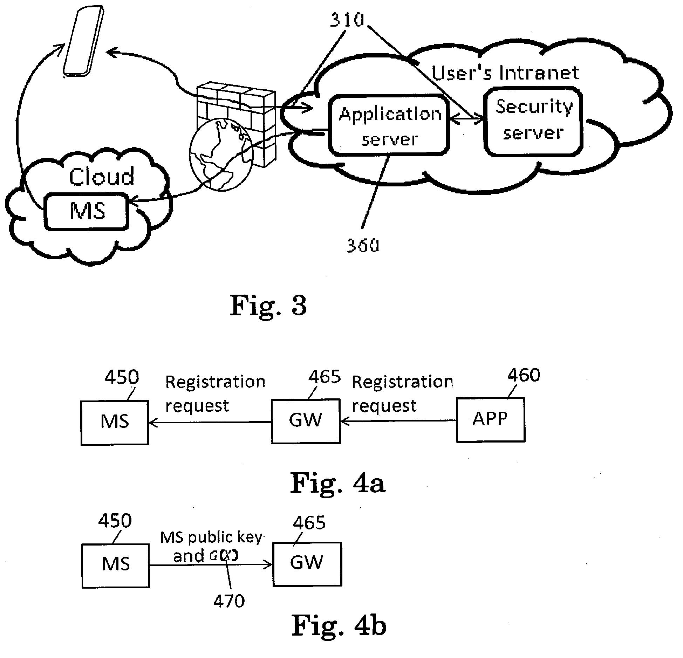

Fig. 3 describes a general architecture of the untrusted model implementation for cases where an application server is employed. The security server is added to the internal network of the user and has no way of transmitting data out through the organizational firewall. The auxiliary public keys of the end point applications can only reach the security server through an independent communication channel 310 and through the application server 360, thereby satisfying the "untrusted" requirement.

For cases where an application server is not employed, the implementation of the untrusted model includes the following two extra components:
1. A full installation of a basic application server which:
   a. Can execute the required REST API calls for logging in and pushing messages (i.e. the complete sending REST API of the push messaging framework).
   b. Can conduct steps 1, 3 and 5 in the application server side (left rectangle of Fig. 2).
   c. users can optionally extend with their own logic.
2. An extended application API which can conduct the steps described above on the application side in the untrusted model (steps 1, 2, 4 and 7 in the right rectangle of Fig. 2).

In another embodiment, the present invention relates to a method for protecting the end-point applications (i.e., the sender application and receiving android applications) private keys on the device. The system of the invention minimizes the time of exposure of the private key in the application's memory and so the private keys are protected. The key scrambled is kept in memory until the exact moment that it needs to be used. After the key scrambled is used, it is again scrambled and cannot be recovered without the scrambling function. The scrambling function is only present on the device when the key needs to be used. It arrives at the application along with a new encrypted push message whose decryption requires the private key. After the message is decrypted, the scrambling function is immediately erased from memory. Furthermore, this scrambling function is refreshed for each message. The following example refers to the Android client for simplicity.

### Example 1:

The following example describes the pseudo code for the store operation, which scrambles the key, and the retrieve operation, which reconstructs the key before it can be used.

### The storing operation:

1. posArray:= array of size 64 with integer random values
2. keyArea := create a two dimension array (64 x 64) where each cell contains 2 bytes.
3. For i:=0 ; i< 64 ; i++
   3.1. keyPart[0]: = key[i*2] // a piece of the key
   3.2. keyPart[1]: = key[i*2 +1]
   3.3. keyPartPos: = specialHash(posArray[i]) //generate index for this key piece
   3.4. keyArea[i][keyPartPos][0]:= keyPart[0] // assign the key piece to its place
   3.5. keyArea[i][keyPartPos][1]:= keyPart[1]
   3.5.1. for j:=0 ; j< 64; j++ //assign random values to cells in the column
      3.5.1.1. if j < > keyPartPos
         3.5.1.1.1. keyArea[i][j][0] = randomize(keyPart[0])
         3.5.1.1.2. keyArea[i][j][1] = randomize(keyPart[1])

### specialHash(x):

1. Input: integer number
2. Returns: hash value of x in range [0-63] where this function behaves different on each android device (flips 2 random bits in the input for example).

### randomize(x):

1. Input: byte
2. Returns: randomization of the bits in *x*

### The retrieve operation:

- key := array of 128 byte;
- for i=0 ; i <63 ; i++
   ∘ key[i*2] : = keyArea[i][specialHash(posArray[i])][0]
   ∘ key[i*2+1] : = keyArea[i][specialHash(posArray[i])][1]
- return key

The registration stage of the trusted model, involves a key exchange process. This process involves the generation of the application's private key and immediate first time scrambling using the method described in example 1 above. For this operation the application randomly generates a gateway from which a scrambling hash function is sent.

The messaging service sends a hash function generator G(X) along with the public key. The hash function generator G(X) takes a binary string of size *n* as input and returns a concrete hash function. An example for such a generator can be a binary decision tree whose leaves are different hash functions. When the generator gets its parameter x, its traverses the tree according to it as follows: each '1' bit corresponds to choosing "yes" and every '0' bit corresponds to choosing "no". The resulting leaf is the selected hash function that will be outputted by the generator.

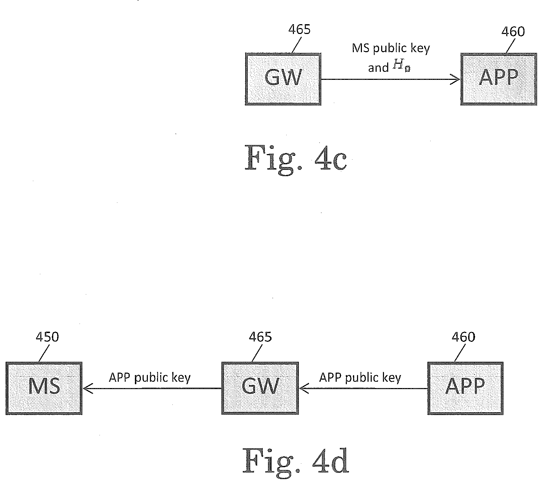

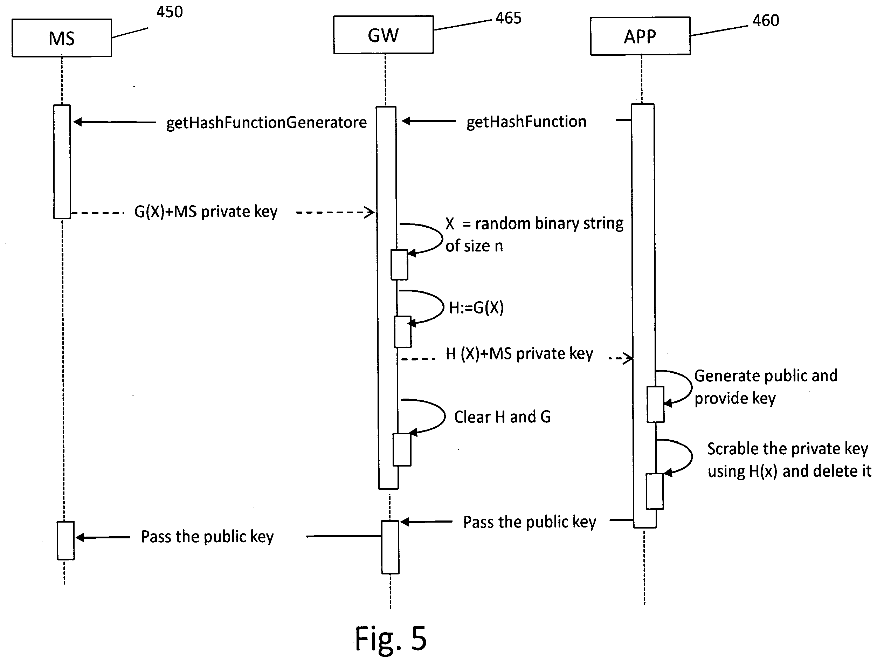

Reference is now made to Figs. 4a - 4d and Fig. 5 which shows the above sequence of events that occur during the initial key scrambling of the registration stage in a schematic sequence diagram. Figs. 4a - 4d show the exact sequence as follows:
1. The application 460 requests to register. This request is mediated by the gateway 465 to the Message Service 450.
2. As can be seen in Fig. 4b, the Message Service creates a hash function generator *G*(*X*) 470, and sends it to the gateway 465 together with its public key. In addition, The Message Service stores the hash function generator *G*(*X*) 470, for future use.
3. With the arrival of the hash function generator *G*(*X*) 470, from the Message Service, the gateway generates *x*, which is a pseudorandom binary string of size *n*, and stores it.
4. The gateway executes *G*(*X*) with *x* and sends the generated hash function generator *G*(*x*) = *H*₀ to the application along with the Message Service's public key as shown in Fig. 4c. The hash function generator *G*(*X*) is deleted immediately afterwards from the gateway's memory.
5. The application generates its cryptographic key pair and scrambles the private key in its memory as was described above. After that, both the private key and the hash function *H*₀ are immediately cleared from the application's memory.
6. The application sends its public key to the MS as shown in Fig. 4d.

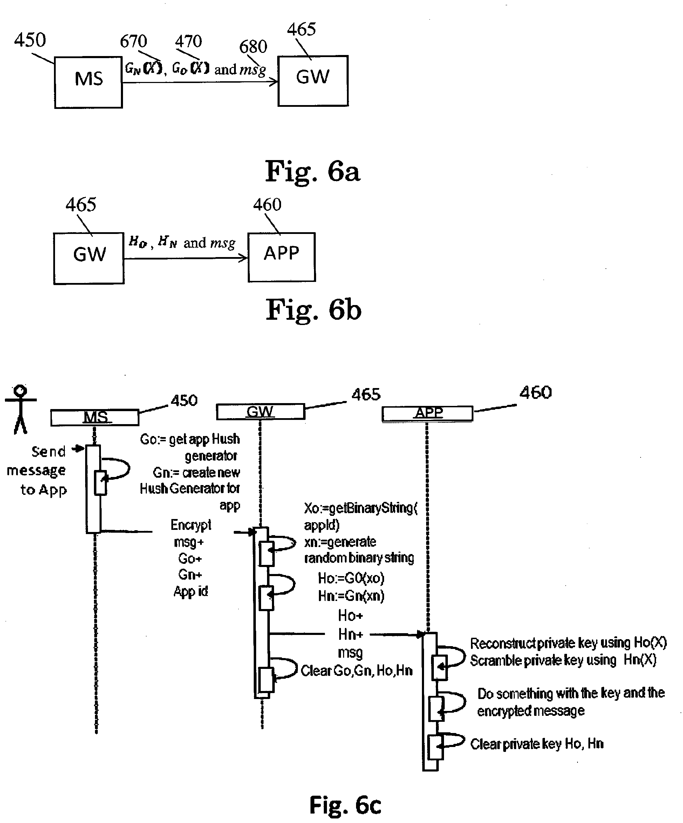

Figs. 6a-6c shows the key reconstruction and subsequent re-scrambling, each time that a new message is pushed to the application. Once the message arrives at the application, the private key is reconstructed using the scrambling hash function that was used when the key was last scrambled, the message is decrypted and then the key is re-scrambled with a new scrambling hash function. Thus, both the old and new scrambling hash functions must be pushed to the Android device along with the new push message.

The exact sequence is as follows:
1. The Message Service 450 creates a new hash function generator *G_{N}*(*X*), 670.
2. The Message Service 450 sends the new hash function generator *G_{N}*(*X*), 670, the generator that was last sent to this application, *G_{O}*(*X*), 470 and the new message, which is encrypted, *msg,* 680.
3. Next, the gateway 465 uses the stored binary string *x*_{O} to derive *H_{O}* from *G_{O}*(*X*), 470.
4. The gateway 465 also generates a new binary string *X_{N},* stores it instead of *x_{O}* and then calculates *G_{N}*(*X_{N}*) = *H_{N}.*
5. The gateway 465 sends *H_{O}* and *H_{N}* to the application along with the message.
6. All generators are cleared from the gateway's memory.
7. When everything arrives at the application, the application reconstructs the private key using *H_{O}*, by using for example the method described above in example 1.
8. The message is decrypted.
9. The private key is re-scrambled according to the method described in example 1, this time using *H_{N}.*
10. The hash functions and the private key are cleared from the application's memory.

Fig. 6c schematically shows the above sequence of events that occur during the key reconstruction and re-scrambling of the push stage.

In another embodiment of the invention, the system relates to an anti-pirating application authentication. Upon application registration, the gateway queries the operation system for the application's signature. The gateway then forwards the application's signature to the Message Service where it is compared to the signature that the user provided when he declared the application. If the signatures are not identical, the application is not registered and cannot receive messages from the Message Service. This mechanism relies on the fact that any alteration to the application's source renders the signature invalid. That means that if the signature passes the check in the Message Service, the application is indeed the original application generated by the user.

All the above description and examples have been given for the purpose of illustration and are not intended to limit the invention in any way. Many different mechanisms and methods of analysis can be employed, all without exceeding the scope of the invention.

## Claims

1. A system for securing a push messaging framework, comprising:
a. a messaging service which forwards a message between at least two end points and generates a pair of a cryptographic public key and a cryptographic private key;
b. a sender application server which registers with said messaging service and receives from said messaging server said public key of the messaging server; wherein said sender application server generates a public key and a private key and sends to the messaging service said public key;
c. one or more receiver application which registers with said messaging service and receive from said messaging server said public key of the messaging service;
wherein said receiver application generates a public key and a private key and sends to the messaging service said public key;
wherein said sender application server, encrypts a message with the public key of said messaging server and sign with the private key of said sender application server and sends said encrypted message to the messaging service;
wherein said messaging server verifies said signature of said sender application server using said public key of said sender application server and decrypts said message with said private key of said messaging server, and wherein said messaging service encrypts said message multiple times, with said public key of said receiver application, signs with the private key of the messaging server and sends said message to said receiver application/s;
wherein said receiver application verifies the signature of the messaging server with said public key of the messaging server and decrypts the message with the private key of said receiver application; and
wherein:
a) said sender application server generates a master key, and said receiver application generates a pair of a private auxiliary key and a public auxiliary key; and
b) wherein said receiver application sends a registration request to said sender application server which contains said public auxiliary key;
c) wherein said sender application server encrypts said master key with said public auxiliary key and sends said encrypted master key to said receiver application;
d) wherein said receiver application decrypts said master key with said private auxiliary key and stores said master key in a memory of said receiver application; and
e) wherein said sender application server encrypts a message with said master key and encrypts said encrypted message with said public key of the messaging server; and
f) wherein said sender application server sends said message to said messaging service, which decrypts said message with the private key of the messaging service then encrypts said message with the public key of the receiver application and sends said message to the receiver application; and
wherein said receiver application decrypts the message with the private key of said receiver application , and then said receiver application, decrypts the resulting message with the master key, thereby receiving the original plaintext of said message;
wherein said system is **characterized by**:
in steps b) to d):
i. said end point application randomly generates a gateway, from which a scrambling hash function is sent;
ii. said messaging service generates and stores a first hash function generator and sends said first hash function generator along with a public key of said messaging service to the gateway;
iii. in said gateway generating a random binary string of size *n;*
iv. said first hash function receives said binary string of size *n* as input, stores said binary string of size *n* and returns a concrete hash function;
v. sending said concrete hash function to said application along with the messaging service public key;
vi. immediately deleting said first hash function generator and said concrete hash function from said gateway memory;
vii. generating by said application said private key and public key, and scrambling said keys using said concrete hash function; and
deleting said concrete hash function from said application memory;
wherein sending a message to the end point application further comprises the steps of:
i. creating a second hash function generator by said message service;
ii. sending to the gateway said second hash function generator, said first hash function generator and said encrypted message by said message service;
iii. using said stored binary string by the gateway to derive said concrete first hash function from said first hash function generator;
iv. generating a second binary string by said gateway, storing said second binary string instead of said stored binary string and calculating a second concrete hash function;
v. sending by said gateway said concrete hash function and said second concrete hash function to the application along with the message.
vi. deleting from the gateway's memory said hash function generator and said second hash function generator;
vii. reconstructing the private key by said application with the first concrete hash function;
viii. decrypting the message;
ix. re-scrambling said private key using said second concrete hash function; and
x. deleting said hash functions and the private key from the application's memory.

2. A system according to claim 1, wherein said messaging service comprises at least one server;

3. A system according to claim 1, further comprising an additional dedicated security server, which communicates with said sender application server over an internal secured channel.

4. A method for securing a push messaging framework comprising the steps of:
a. generating a private key and a public key by a Messaging Service;
b. sending a registration request by a sender application and a receiver application to said messaging service;
c. sending in reply said public key of said messaging service to said sender application and to said receiver application;
d. generating a public key and a private key by said sender application and by said receiver application;
e. sending said public key of said sender application and the public key of said receiver application to the messaging service;
f. responding with an acknowledgment indicating that the registration was completed successfully by the messaging service;
g. encrypting a message with said public key of said messaging service by the sender application, signing with said sender application private key and sending said encrypted message to said messaging service;
h. verifying by said messaging service the signature of said sender application with said sender application public key, and decrypting said message with said private key of said messaging service
i. encrypting said message with said receiver application public key and signing with said messaging service's private key;
j. sending said message by the messaging service to the receiver application; and
k. verifying the signature with the messaging service's public key by the receiver application;
l. decrypting said message by the receiver application with the private key of said receiver application;
wherein:
A) prior to the step of generating a public key and a private key by the messaging service, further comprising the stages of
a) generating a master key by said sender application server and generating a pair of a private auxiliary key and a public auxiliary key by said receiver application;
b) sending a registration request by said receiver application to said sender application server wherein said registration request contains said public auxiliary public key of said receiver application;
c) encrypting said master key generated by said sender application server with the public auxiliary key of said receiver application and sending said encrypted master key to said receiver application;
d) decrypting by said receiver application said encrypted master key with said private auxiliary key of said receiver application and storing said master key in said receiver application memory;
e) encrypting a message by the sender application server with the master key and encrypting said encrypted message with said public key of the messaging service;
f) sending said encrypted message to the messaging service; and
B) In addition to said step of decrypting said message by the receiver application with the private key of said receiver application, decrypting by said receiver application said encrypted message with the master key and receiving the original plaintext of said message.
said method is **characterized by**:
said steps b) to d) comprises the steps of:
i. randomly generating a gateway by said end point application, from which a scrambling hash function is sent;
ii. generating and storing a first hash function generator by said messaging service and sending to the gateway said first hash function generator along with a public key of said messaging service;
iii. generating a random binary string of size *n* in said gateway;
iv. receiving said binary string of size *n* as input by said first hash function, storing said binary string of size *n* and returning a concrete hash function;
v. sending said concrete hash function to said application along with the messaging service public key;
vi. immediately deleting said first hash function generator and said concrete hash function from said gateway memory;
vii. generating by said application said private key and public key, and scrambling said keys using said concrete hash function; and
viii. deleting said concrete hash function from said application memory;
and wherein sending a message to the end point application further comprises the steps of:
i. creating a second hash function generator by said message service;
ii. sending to the gateway said second hash function generator, said first hash function generator and said encrypted message by said message service;
iii. using said stored binary string by the gateway to derive said concrete first hash function from said first hash function generator;
iv. generating a second binary string by said gateway, storing said second binary string instead of said stored binary string and calculating a second concrete hash function;
v. sending by said gateway said concrete hash function and said second concrete hash function to the application along with the message.
vi. deleting from the gateway's memory said hash function generator and said second hash function generator;
vii. reconstructing the private key by said application with the first concrete hash function;
viii. decrypting the message;
ix. re-scrambling said private key using said second concrete hash function; and
x. deleting said hash functions and the private key from the application's memory.

5. A method according to claim 4, further comprising the step of setting up an additional application server for security so that said additional application server can communicate with a sender application server over an internal secured channel.

## Patentansprüche

1. System zum Schützen eines Push-Nachrichten-Frameworks umfassend:
a. einen Nachrichtendienst, der eine Nachricht zwischen mindestens zwei Endpunkten weiterleitet und der ein Paar aus einem kryptographischen öffentlichen Schlüssel und einem kryptographischen privaten Schlüssel erzeugt;
b. einen Sender-Applikations-Server, der sich bei dem Nachrichtendienst registriert und von dem Nachrichtenserver einen öffentlichen Schlüssel des Nachrichtenservers empfängt; wobei der Sender-Applikations-Server einen öffentlichen Schlüssel und einen privaten Schlüssel erzeugt und an den Nachrichtendienst den öffentlichen Schlüssel sendet;
c. eine oder mehrere Empfangsapplikationen, die sich bei dem Nachrichtendienst registrieren und die von dem Nachrichtenserver den öffentlichen Schlüssel des Nachrichtendienst empfangen; wobei die Empfangsapplikation einen öffentlichen Schlüssel und einen privaten Schlüssel erzeugt und dem Nachrichtendienst den öffentlichen Schlüssel sendet;
wobei der Sender-Applikations-Server eine Nachricht mit dem öffentlichen Schlüssel des Nachrichtenservers verschlüsselt und mit dem privaten Schlüssel des Sender-Applikations-Servers signiert und die verschlüsselte Nachricht an den Nachrichtendienst sendet;
wobei der Nachrichtenserver die Signatur des Sender-Applikations-Servers unter Verwendung des öffentlichen Schlüssels des Sender-Applikation-Servers verifiziert und die Nachricht mit dem privaten Schlüssel des Nachrichtenservers entschlüsselt und wobei der Nachrichtendienst die Nachricht mehrere Male verschlüsselt mit dem öffentlichen Schlüssel der Empfängerapplikation und mit dem privaten Schlüssel des Nachrichtenservers signiert und die Nachricht an die Empfängerapplikation/en versendet;
wobei die Empfängerapplikation die Signatur des Nachrichtenservers mit dem öffentlichen Schlüssel des Nachrichtenservers verifiziert und die Nachricht mit dem privaten Schlüssel der Empfängerapplikation entschlüsselt; und
wobei:
a) der Sender-Applikations-Server einen Masterschlüssel erzeugt und die Empfängerapplikation ein Paar aus einem privaten Hilfsschlüssel und einem öffentlichen Hilfsschlüssel erzeugt; und
b) wobei die Empfängerapplikation eine Registrierungsanfrage an den Sender-Applikations-Server sendet, die den öffentlichen Hilfsschlüssel beinhaltet;
c) wobei der Sender-Applikations-Server den Masterschlüssel mit dem öffentlichen Hilfsschlüssel verschlüsselt und den verschlüsselten Masterschlüssel an die Empfängerapplikation sendet;
d) wobei die Empfängerapplikation den Masterschlüssel mit dem privaten Hilfsschlüssel entschlüsselt und den Masterschlüssel in einem Speicher der Empfängerapplikation speichert; und
e) wobei der Sender-Applikations-Server eine Nachricht mit dem Masterschlüssel verschlüsselt und diese verschlüsselte Nachricht mit dem öffentlichen Schlüssel des Nachrichtenservers verschlüsselt; und
f) wobei der Sender-Applikations-Server die Nachricht an den Nachrichtendienst sendet, der die Nachricht mit dem privaten Schlüssel des Nachrichtendiensts entschlüsselt und dann die Nachricht mit dem öffentlichen Schlüssel der Empfängerapplikation verschlüsselt und die Nachricht an die Empfängerapplikation sendet; und
wobei die Empfängerapplikation die Nachricht mit dem privaten Schlüssel der Empfängerapplikation entschlüsselt und dann die Empfängerapplikation die resultierende Nachricht mit dem Masterschlüssel entschlüsselt, wodurch der originale Klartext der Nachricht erhalten wird;
wobei das System charakterisiert ist durch:
in Schritten b) bis d):
i. die Endpunktapplikation generiert zufällig ein Gateway, von dem eine Scrambling-Hash-Funktion gesendet wird;
ii. der Nachrichtendienst erzeugt und speichert einen ersten Hash-Funktions-Generator und sendet den ersten Hash-Funktions-Generator zusammen mit einem öffentlichen Schlüssel des Nachrichtendienstes an das Gateway;
iii. Erzeugen eines zufälligen binären Strings der Größe n in dem Gateway;
iv. die erste Hash-Funktion empfängt den binären String der Größe n als Input, speichert den binären String der Größe n und gibt eine konkrete Hash-Funktion zurück;
v. Senden der konkreten Hash-Funktion an die Applikation zusammen mit dem öffentlichen Schlüssel des Nachrichtendienstes;
vi. sofortiges Löschen des ersten Hash-Funktions-Generators und der konkreten Hash-Funktion aus einem Speicher des Gateways;
vii. Erzeugen des privaten Schlüssels und des öffentlichen Schlüssels durch die Applikation und Scrambling des Schlüssels unter Verwendung der konkreten Hash-Funktion; und
Löschen der konkreten Hash-Funktion von dem Speicher der Applikation;
wobei Senden einer Nachricht zu der Endpunktapplikation ferner umfasst die Schritte eines:
i. Erzeugens eines zweiten Hash-Funktions-Generators durch den Nachrichtendienst;
ii. Sendens des zweiten Hash-Funktions-Generators, des ersten Hash-Funktions-Generators und der verschlüsselten Nachricht durch den Nachrichtendienst an das Gateway;
iii. Verwendens des gespeicherten binären Strings durch das Gateway, um die erste konkrete Hash-Funktion aus dem ersten Hash-Funktions-Generator abzuleiten;
iv. Erzeugens eines zweiten binären Strings durch das Gateway, Speichern des zweiten binären Strings anstelle des gespeicherten binären Strings und Berechnen einer zweiten konkreten Hash-Funktion;
v. Sendens der konkreten Hash-Funktion und der zweiten konkreten Hash-Funktion an die Applikation zusammen mit der Nachricht durch das Gateway;
vi. Löschens des Hash-Funktions-Generators und des zweiten Hash-Funktions-Generators aus dem Speicher des Gateways;
vii. Rekonstruierens des privaten Schlüssels durch die Applikation mit der ersten konkreten Hash-Funktion;
viii. Entschlüsselns der Nachricht;
ix. Rescramblings des privaten Schlüssels unter Verwendung der zweiten konkreten Hash-Funktion; und
x. Löschens der Hash-Funktionen und des privaten Schlüssels aus dem Speicher der Applikation.

2. System nach Anspruch 1, wobei der Nachrichtendienst mindestens einen Server umfasst.

3. System nach Anspruch 1 ferner umfassend einen zusätzlichen speziell dafür vorgesehenen Sicherheitsserver, der mit dem Sender-Applikations-Server über einen internen sicheren Kanal kommuniziert.

4. Verfahren zum Schützen eines Push-Nachrichten-Frameworks umfassend die Schritte eines:
a. Erzeugens eines privaten Schlüssels und eines öffentlichen Schlüssels durch einen Nachrichtendienst;
b. Sendens einer Registrierungsanfrage durch eine Senderapplikation und eine Empfängerapplikation an den Nachrichtendienst;
c. Sendens des öffentlichen Schlüssel des Nachrichtendienstes an die Senderapplikation und die Empfängerapplikation als Antwort;
d. Erzeugens eines öffentlichen Schlüssels und eines privaten Schlüssels durch die Senderapplikation und durch die Empfängerapplikation;
e. Sendens des öffentlichen Schlüssels der Senderapplikation und des öffentlichen Schlüssels der Empfängerapplikation an den Nachrichtendienst;
f. Antwortens mit einer Bestätigung anzeigend, dass die Registrierung durch den Nachrichtendienst erfolgreich fertiggestellt worden ist;
g. Verschlüsselns einer Nachricht mit dem öffentlichen Schlüssel des Nachrichtendienstes durch die Senderapplikation, Signierens mit dem privaten Schlüssel der Senderapplikation und Sendens der verschlüsselten Nachricht an den Nachrichtendienst;
h. Verifizierens der Signatur der Senderapplikation durch den Nachrichtendienst mit dem öffentlichen Schlüssel der Senderapplikation und Entschlüsselns der Nachricht mit dem privaten Schlüssel des Nachrichtendienstes;
i. Verschlüsselns der Nachricht mit dem öffentlichen Schlüssel der Empfängerapplikation und Signierens mit dem privaten Schlüssel des Nachrichtendienstes;
j. Sendens der Nachricht durch den Nachrichtendienst an die Empfängerapplikation; und
k. Verifizierens der Signatur mit dem öffentlichen Schlüssel des Nachrichtendienstes durch die Empfängerapplikation;
l. Entschlüsselns der Nachricht durch die Empfängerapplikation mit dem privaten Schlüssel der Empfängerapplikation;
wobei:
A) vor dem Schritt des Erzeugens eines öffentlichen Schlüssels und eines privaten Schlüssels durch den Nachrichtendienst ferner umfassend die Stufen eines:
a) Erzeugens eines Masterschlüssels durch den Sender-Applikations-Server und Erzeugens eines Paars aus einem privaten Hilfsschlüssel und einem öffentlichen Hilfsschlüssel durch die Empfängerapplikation;
b) Sendens einer Registrierungsanfrage durch die Empfängerapplikation an den Sender-Applikations-Server, wobei die Registrierungsanfrage den öffentlichen Schlüssel der Empfängerapplikation beinhaltet;
c) Verschlüsselns des Masterschlüssels, der durch den Sender-Applikations-Server erzeugt wurde, mit dem öffentlichen Hilfsschlüssel der Empfängerapplikation und Sendens des verschlüsselten Masterschlüssels an die Empfängerapplikation;
d) Entschlüsselns des verschlüsselten Masterschlüssels durch die Empfängerapplikation mit dem privaten Hilfsschlüssel der Empfängerapplikation und Speichern des Masterschlüssels in einem Speicher der Empfängerapplikation;
e) Verschlüsselns einer Nachricht durch den Sender-Applikations-Server mit dem Masterschlüssel und Verschlüsselns der verschlüsselten Nachricht mit dem öffentlichen Schlüssel des Nachrichtendienstes;
f) Sendens der verschlüsselten Nachricht an den Nachrichtendienst; und
B) zusätzlich zu dem Schritt des Entschlüsselns der Nachricht durch die Empfängerapplikation mit dem privaten Schlüssel der Empfängerapplikation, Entschlüsseln durch die Empfängerapplikation der verschlüsselten Nachricht mit dem Masterschlüssel und Empfangens des originalen Klartextes der Nachricht;
wobei das Verfahren **gekennzeichnet ist dadurch**, dass:
die Schritte b) bis d) die Schritte umfassen eines:
i. zufälliges Erzeugens eines Gateways **durch** die Endpunktapplikation, von der eine Scrambling-Hash-Funktion gesendet wird;
ii. Erzeugens und Speicherns eines ersten Hash-Funktions-Generators **durch** den Nachrichtendienst und Sendens des ersten Hash-Funktions-Generators an das Gateway zusammen mit einem öffentlichen Schlüssel des Nachrichtendienstes;
iii. Erzeugens eines zufälligen binären Strings der Größe n in dem Gateway;
iv. Empfangens des binären Strings der Größe n als Input **durch** die erste Hash-Funktion, Speicherns des binären Strings der Größe n und Zurückgebens einer konkreten Hash-Funktion;
v. Sendens der konkreten Hash-Funktion an die Applikation zusammen mit dem öffentlichen Schlüssel des Nachrichtendienstes;
vi. sofortiges Löschens des ersten Hash-Funktions-Generators und der konkreten Hash-Funktion aus einem Speicher des Gateways;
vii. Erzeugens des privaten Schlüssels und des öffentlichen Schlüssels **durch** die Applikation und Scrambling des Schlüssels unter Verwendung der konkreten Hash-Funktion; und
viii. Löschens der konkreten Hash-Funktion aus einem Speicher der Applikation;
und wobei das Senden einer Nachricht an die Endpunktapplikation ferner die Schritte umfasst eines:
i. Erzeugens eines zweiten Hash-Funktions-Generators **durch** den Nachrichtendienst;
ii. Sendens des zweiten Hash-Funktions-Generators, des ersten Hash-Funktions-Generators und der verschlüsselten Nachricht **durch** den Nachrichtendienst an das Gateway;
iii. Verwendens des gespeicherten binären Strings **durch** das Gateway, um die erste konkrete Hash-Funktion aus dem ersten Hash-Funktions-Generator abzuleiten;
iv. Erzeugens eines zweiten binären Strings **durch** das Gateway, Speicherns des zweiten binären Strings anstelle des gespeicherten binären Strings und Berechnens einer zweiten konkreten Hash-Funktion;
v. Sendens der konkreten Hash-Funktion und der zweiten konkreten Hash-Funktion an die Applikation zusammen mit der Nachricht **durch** das Gateway;
vi. Löschens des Hash-Funktions-Generators und des zweiten Hash-Funktions-Generators aus dem Speicher des Gateways;
vii. Rekonstruierens des privaten Schlüssels **durch** die Applikation mit der ersten konkreten Hash-Funktion;
viii. Entschlüsselns der Nachricht;
ix. Rescramblings des privaten Schlüssels unter Verwendung der zweiten konkreten Hash-Funktion; und
x. Löschens der Hash-Funktionen und des privaten Schlüssels aus dem Speicher der Applikation.

5. Verfahren nach Anspruch 4 ferner umfassend den Schritt eines Einrichtens eines zusätzlichen Applikationsservers zur Sicherheit, so dass der zusätzliche Applikationsserver mit einem Sender-Applikations-Server über einen internen sicheren Kanal kommunizieren kann.

## Revendications

1. Système pour sécuriser une structure de messagerie push, comprenant :
a. un service de messagerie qui transmet un message entre au moins deux points terminaux et génère une paire d'une clé publique cryptographique et d'une clé privée cryptographique ;
b. un serveur d'application expéditeur qui enregistre avec ledit service de messagerie et reçoit à partir dudit serveur de messagerie ladite clé publique du serveur de messagerie ;
dans lequel ledit serveur d'application expéditeur génère une clé publique et une clé privée et envoie au service de messagerie ladite clé publique ;
c. une ou plusieurs applications destinataire qui enregistre avec ledit service de messagerie et reçoit à partir dudit serveur de messagerie ladite clé publique du service de messagerie ;
dans lequel ladite application destinataire génère une clé publique et une clé privée et envoie au service de messagerie ladite clé publique ;
dans lequel ledit serveur d'application expéditeur crypte un message avec la clé publique dudit serveur de messagerie et signe avec la clé privée dudit serveur d'application expéditeur et envoie ledit message crypté au service de messagerie, dans lequel ledit serveur de messagerie vérifie ladite signature dudit serveur d'application expéditeur au moyen de ladite clé publique dudit serveur d'application expéditeur et décrypte ledit message avec ladite clé privée dudit serveur de messagerie, et dans lequel ledit service de messagerie crypte ledit message de multiples fois, avec ladite clé publique de ladite application destinataire, signe avec la clé privée du serveur de messagerie et envoie ledit message à ladite/auxdites application(s) destinataire ;
dans lequel ladite application destinataire vérifie la signature du serveur de messagerie avec ladite clé publique du serveur de messagerie et décrypte le message avec la clé privée de ladite application destinataire ; et
dans lequel :
a) ledit serveur d'application expéditeur génère une clé maître, et ladite application destinataire génère une paire d'une clé auxiliaire privée et d'une clé auxiliaire publique ; et
b) dans lequel ladite application destinataire envoie une demande d'enregistrement audit serveur d'application expéditeur qui contient ladite clé auxiliaire publique ;
c) dans lequel ledit serveur d'application expéditeur crypte ladite clé maître avec ladite clé auxiliaire publique et envoie ladite clé maître cryptée à ladite application destinataire ;
d) dans lequel ladite application destinataire décrypte ladite clé maître avec ladite clé auxiliaire privée et stocke ladite clé maître dans une mémoire de ladite application destinataire ; et
e) dans lequel ledit serveur d'application expéditeur crypte un message avec ladite clé maître et crypte ledit message crypté avec ladite clé publique du serveur de messagerie ; et
f) dans lequel ledit serveur d'application expéditeur envoie ledit message audit service de messagerie, qui décrypte ledit message avec la clé privée du service de messagerie qui crypte ledit message avec la clé publique de l'application destinataire et envoie ledit message à l'application destinataire ; et
dans lequel ladite application destinataire décrypte le message avec la clé privée de ladite application destinataire, et puis ladite application destinataire décrypte le message résultant avec la clé maître, recevant ainsi le texte intégral original dudit message ;
dans lequel ledit système est **caractérisé par** :
dans les étapes b) à d) :
i. ladite application de point terminal génère de manière aléatoire une passerelle, à partir de laquelle une fonction de hachage pour brouillage est envoyée ;
ii. ledit service de messagerie génère et stocke un premier générateur de fonction de hachage et envoie ledit premier générateur de fonction de hachage conjointement avec la clé publique dudit service de messagerie à la passerelle ;
iii. dans ladite passerelle, la génération d'une chaîne binaire aléatoire de taille *n* ;
iv. ladite première fonction de hachage reçoit ladite chaîne binaire de taille *n* en tant qu'entrée, stocke ladite chaîne binaire de taille *n* et renvoie une fonction de hachage concrète ;
v. l'expédition de ladite fonction de hachage concrète à ladite application conjointement avec la clé publique de service de messagerie ;
vi. la suppression immédiate dudit premier générateur de fonction de hachage et de ladite fonction de hachage concrète de la mémoire de ladite passerelle ;
vii. la génération par ladite application de ladite clé privée et de ladite clé publique, et le brouillage desdites clés au moyen de ladite fonction de hachage concrète ; et
la suppression de ladite fonction de hachage concrète de ladite mémoire d'application ;
dans lequel l'expédition d'un message à l'application de point final comprend en outre les étapes suivantes :
i. la création d'un second générateur de fonction de hachage par ledit service de messagerie,
ii. l'expédition à la passerelle dudit second générateur de fonction de hachage, dudit premier générateur de fonction de hachage et dudit message crypté par ledit service de messagerie,
iii. l'utilisation de ladite chaîne binaire stockée par la passerelle pour dériver ladite première fonction de hachage concrète à partir dudit premier générateur de fonction de hachage ;
iv. la génération d'une seconde chaîne binaire par ladite passerelle, le stockage de ladite seconde chaîne binaire à la place de ladite chaîne binaire stockée et le calcul d'une seconde fonction de hachage concrète ;
v. l'expédition par ladite passerelle de ladite première fonction de hachage concrète et de ladite seconde fonction de hachage concrète à l'application conjointement avec le message ;
vi. la suppression de la mémoire de la passerelle dudit premier générateur de fonction de hachage et dudit second générateur de fonction de hachage ;
vii. la reconstruction de la clé privée par ladite application avec la première fonction de hachage concrète ;
viii. le décryptage du message ;
ix. le nouveau brouillage de ladite clé privée au moyen de ladite seconde fonction de hachage concrète ; et
x. la suppression desdites fonctions de hachage et de la clé privée de la mémoire de l'application.

2. Système selon la revendication 1, dans lequel ledit service de messagerie comprend au moins un serveur.

3. Système selon la revendication 1, comprenant en outre un serveur de sécurité dédié supplémentaire, qui communique avec ledit serveur d'application expéditeur sur un canal sécurisé interne.

4. Procédé pour sécuriser une structure de messagerie push comprenant les étapes suivantes :
a. la génération d'une clé privée et d'une clé publique par un système de messagerie ;
b. l'expédition d'une demande d'enregistrement par une application expéditeur et une application destinataire audit service de messagerie ;
c. l'expédition en réponse de ladite clé publique dudit service de messagerie à ladite application expéditeur et à ladite application destinataire ;
d. la génération d'une clé publique et d'une clé privée par ladite application expéditeur et par ladite application destinataire ;
e. l'expédition de ladite clé publique de ladite application expéditeur et de la clé publique de ladite application destinataire au service de messagerie ;
f. la réponse avec un accusé de réception indiquant que l'enregistrement a été terminé avec succès par le service de messagerie ;
g. le cryptage d'un message avec ladite clé publique dudit service de messagerie par l'application expéditeur, la signature avec ladite clé privée d'application expéditeur et l'expédition dudit message crypté audit service de messagerie ;
h. la vérification par ledit service de messagerie de la signature de ladite application expéditeur avec ladite clé publique d'application expéditeur, et le décryptage dudit message avec ladite clé privée dudit service de messagerie ;
i. le cryptage dudit message avec ladite clé publique d'application destinataire et la signature avec ladite clé privée du service de messagerie ;
j. l'expédition dudit message par le service de messagerie à l'application destinataire ; et
k. la vérification de la signature avec la clé publique du service de messagerie par l'application destinataire ;
l. le décryptage dudit message par l'application destinataire avec la clé privée de ladite application destinataire ;
dans lequel :
A) avant l'étape de génération d'une clé publique et d'une clé privée par le service de messagerie, comprenant en outre les étapes suivantes ;
a) la génération d'une clé maître par ledit serveur d'application destinataire et la génération d'une paire d'une clé auxiliaire privée et d'une clé auxiliaire publique par ladite application destinataire ;
b) l'expédition d'une demande d'enregistrement par ladite application destinataire audit serveur d'application expéditeur, ladite demande d'enregistrement contenant ladite clé auxiliaire publique de ladite application destinataire ;
c) le cryptage de ladite clé maître générée par ledit serveur d'application expéditeur avec ladite clé auxiliaire publique de ladite application destinataire et l'expédition de ladite clé maître cryptée à ladite application destinataire ;
d) le décryptage par ladite application destinataire de ladite clé maître cryptée avec ladite clé auxiliaire privée de ladite application destinataire et le stockage de ladite clé maître dans la mémoire de ladite application destinataire ;
e) le cryptage d'un message par le serveur d'application expéditeur avec la clé maître et le cryptage dudit message crypté avec ladite clé publique du service de messagerie ;
f) l'expédition dudit message crypté au service de messagerie ; et
B) outre ladite étape de cryptage dudit message par l'application destinataire avec la clé privée de ladite application destinataire, le décryptage par ladite application destinataire dudit message crypté avec la clé maître et la réception du texte intégral original dudit message ;
ledit procédé est **caractérisé en ce que** :
lesdites étapes b) à d) comprennent les étapes suivantes :
i. la génération aléatoire d'une passerelle par ladite application de point terminal, à partir de laquelle une fonction de hachage pour brouillage est envoyée ;
ii. la génération et le stockage d'un premier générateur de fonction de hachage et l'expédition à la passerelle dudit premier générateur de fonction de hachage conjointement avec la clé publique dudit service de messagerie ;
iii. la génération d'une chaîne binaire aléatoire de taille *n* dans ladite passerelle ;
iv. la réception de ladite chaîne binaire de taille *n* en tant qu'entrée par ladite première fonction de hachage, le stockage de ladite chaîne binaire de taille *n* et le renvoi d'une fonction de hachage concrète ;
v. l'expédition de ladite fonction de hachage concrète à ladite application conjointement avec la clé publique de service de messagerie ;
vi. la suppression immédiate dudit premier générateur de fonction de hachage et de ladite fonction de hachage concrète de la mémoire de ladite passerelle ;
vii. la génération par ladite application de ladite clé privée et de ladite clé publique, et le brouillage desdites clés au moyen de ladite fonction de hachage concrète ; et
viii. la suppression de ladite fonction de hachage concrète de ladite mémoire d'application ;
et dans lequel l'expédition d'un message à l'application de point final comprend en outre les étapes suivantes :
i. la création d'un second générateur de fonction de hachage par ledit service de messagerie,
ii. l'expédition à la passerelle dudit second générateur de fonction de hachage, dudit premier générateur de fonction de hachage et dudit message crypté par ledit service de messagerie,
iii. l'utilisation de ladite chaîne binaire stockée par la passerelle pour dériver ladite première fonction de hachage concrète à partir dudit premier générateur de fonction de hachage ;
iv. la génération d'une seconde chaîne binaire par ladite passerelle, le stockage de ladite seconde chaîne binaire à la place de ladite chaîne binaire stockée et le calcul d'une seconde fonction de hachage concrète ;
v. l'expédition par ladite passerelle de ladite première fonction de hachage concrète et de ladite seconde fonction de hachage concrète à l'application conjointement avec le message ;
vi. la suppression de la mémoire de la passerelle dudit premier générateur de fonction de hachage et dudit second générateur de fonction de hachage ;
vii. la reconstruction de la clé privée par ladite application avec la première fonction de hachage concrète ;
viii. le décryptage du message ;
ix. le nouveau brouillage de ladite clé privée au moyen de ladite seconde fonction de hachage concrète ; et
x. la suppression desdites fonctions de hachage et de la clé privée de la mémoire de l'application.

5. Procédé selon la revendication 4, comprenant en outre l'étape de mise en place d'un serveur d'application supplémentaire pour la sécurité de sorte que ledit serveur d'application supplémentaire peut communiquer avec un serveur d'application expéditeur sur un canal sécurisé interne.
